# EUROPEAN PATENT APPLICATION

(11) **EP 1 967 967 A1**
(43) Date of publication of application: **10.09.2008**
(21) Application number: 08002392.2
(22) Date of filing: 08.02.2008
(51) Int. Cl.: G06F 17/30

(54) **Driving web browser**

(30) Priority: 08.03.2007 KR 20070022861
(71) Applicant: LG Electronics Inc., Yongdungpo-gu Seoul 150-010 (KR)
(72) Inventor: Park, Yeonwoo, Seoul 153-801 (KR)
(74) Representative: Katérle, Axel

(57) **Abstract**

A method for operating a web browser of a communication device and a communication device for operating a web browser are disclosed. The method includes initializing the web browser, accessing a plurality of websites designated by different addresses, and selectively displaying on a display of the communication device at least one web page associated with a corresponding at least one website of the plurality of websites.

## Description

### FIELD OF INVENTION

The present invention is directed to driving a web browser in a communication device.

### DESCRIPTION OF RELATED ART

Generally, a communication device capable of connecting to the Internet drives a web browser to access websites. The web browser accesses a specific website upon being initially driven in the communication device, and displays on a screen of the communication device a specific web page provided by the specific website.

Most users frequently access more than one website at the same time, and also have a listing of their frequently visited websites. However, the users have to perform further operations to drive the web browser in order to access their desired websites.

Furthermore, several websites accessible by the initially driven web browser are fixed to only one for the general communication device. Thus, the users have to search menu structures to find bookmarks of the desired websites, or enter addresses of the desired websites.

### SUMMARY OF THE INVENTION

In one general aspect of the present invention, a method for driving a web browser of a communication device includes initializing the web browser, accessing a plurality of websites designated by different addresses, and selectively displaying on a display of the communication device at least one web page associated with a corresponding at least one website of the plurality of websites.

It is contemplated that the method further includes displaying notification information indicating progress of the accessing the plurality of websites. It is further contemplated that the notification information includes at least one of graphic information and numeric information.

It is contemplated that the method further includes simultaneously accessing the plurality of websites. It is further contemplated that the method includes serially accessing the plurality of websites.

It is contemplated that the method further includes displaying a plurality of icons individually associated with one of the plurality of websites. It is further contemplated that if a specific icon is selected from the plurality of icons, a web page corresponding to the website associated with the selected icon is displayed on the display.

Moreover, it is further contemplated that the plurality of websites and the plurality of icons are displayed on a touch input device which permits input via user contact.

It is contemplated that the method further includes displaying on the display a plurality of web pages individually corresponding to one of the plurality of websites. It is further contemplated that method includes displaying the plurality of web pages in individual sub-areas of the display.

It is contemplated that the each of the plurality of websites and the number of the websites to be accessed are settable and changeable.

In another aspect of the present invention, a mobile terminal includes a web browser, a transceiver for transmitting and receiving data with a wired or wireless network, a controller for accessing a plurality of websites designated by different addresses through the transceiver via the web browser, and a display for displaying at least one web page associated with a corresponding at least one website of the plurality of websites.

Further features will be apparent from the following description, including the drawings, and the claims.

### BRIEF DESCRIPTION OF THE DRAWINGS

The aspects and features of the present invention and methods for achieving the aspects and features will be apparent by referring to the embodiments to be described in detail with reference to the accompanying drawings. However, the present invention is not limited to the embodiments disclosed hereinafter but can be implemented in diverse forms. The matters defined in the description, such as the detailed construction and elements, are nothing but specific details provided to assist those of ordinary skill in the art in a comprehensive understanding of the invention. The present invention is only defined within the scope of the appended claims. In the entire description of the present invention, the same drawing reference numerals are used for the same or similar elements across various figures.

FIG. 1 is a schematic view illustrating a communication system and network.

FIG. 2 is a block diagram illustrating a communication device according to an embodiment of the present invention.

FIG. 3 is a flowchart illustrating a method for driving a web browser according to an embodiment of the present invention.

FIG. 4 illustrates a screen displaying a web page according to an embodiment of the present invention.

FIG. 5 illustrates the screen of FIG. 4 displaying icons indicating websites according to an embodiment of the present invention.

FIG. 6 illustrates a screen displaying a web page selected by one of the icons of FIG. 5.

FIG. 7 illustrates a screen displaying four web pages according to an embodiment of the present invention.

FIGS. 8A and 8B illustrate screens displaying two web pages according to an embodiment of the present invention.

FIGS. 9A and 9B illustrate screens displaying two web pages according to another embodiment of the present invention.

FIG. 10 is a flowchart illustrating a method for driving a web browser according to an alternative embodiment of the present invention.

### DETAILED DESCRIPTION OF PREFERRED EMBODIMENTS

A method for driving a web browser on a communication device, and a communication device for performing the same will now be described in detail with reference to the accompanying drawings.

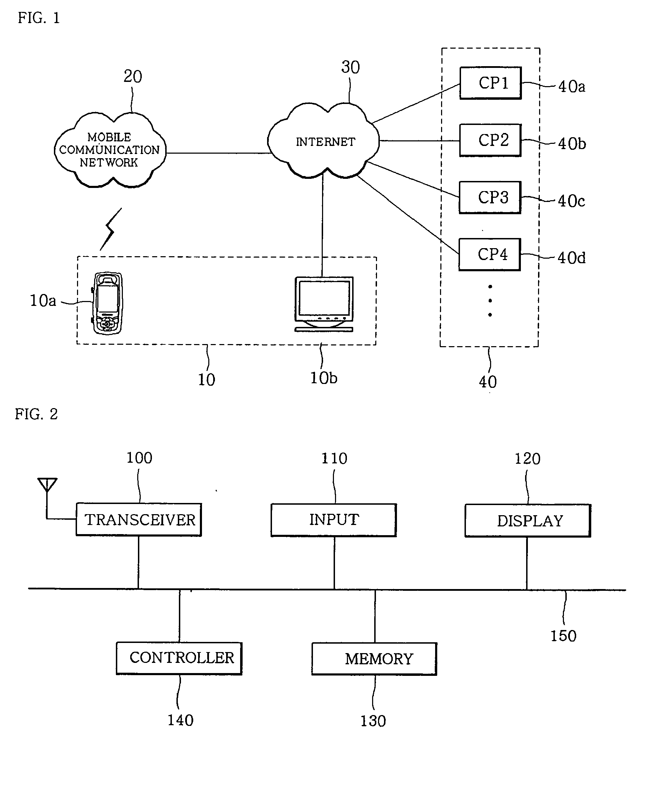

FIG. 1 is a schematic view illustrating a communication system. The system comprises communication devices 10a and 10b, a mobile communication network 20, an Internet 30, and a plurality of content providing servers 40a-40d.

The communication devices include any communication device capable of connecting to the Internet 30, including the wireless Internet. Examples of such communication devices include a mobile terminal 10a capable of communicating with the mobile communication network 20 connected to the Internet 30, and a computer 10b capable of connecting to the Internet 30.

FIG. 1 shows content providing servers 40a-40d separately providing websites designated by different Internet addresses. Each of the websites may provide at least one web page.

FIG. 2 is a block diagram illustrating a communication device for driving a web browser. For clarity, the mobile terminal 10a will be referenced as the communication device throughout this document.

The mobile terminal 10a may comprise a transceiver 100, an input 110, a display 120, a memory 130, and a controller 140. Each of the elements of the mobile terminal 10a may be connected via a common bus 150. Alternatively, each of the elements may be connected to another part through its own bus.

The transceiver 100 transmits and receives data with the mobile communication network 20. The transceiver 100 may transmit and receive data with the Internet 30, since the mobile communication network 20 is connected with the Internet 30. For the computer 10b, its transceiver 100 may perform wired communications with another device connected to the Internet 30.

The input 110 receives various information and commands from a user. The input 110 may be implemented as a touch screen or a key pad including various number keys and function keys.

The display 120 displays status of the mobile terminal 10a or various types of information according to control signals from the controller 140.

The memory 130 stores programs for controlling overall operation of the mobile terminal 10a. The memory 130 also stores various data input and output, and data which is processed during operation of the mobile terminal 10a. Particularly, the memory 130 stores a program and data for driving a web browser.

The controller 140 controls the above described elements and overall operation of the mobile terminal 10a based on the programs and data stored at the memory 130.

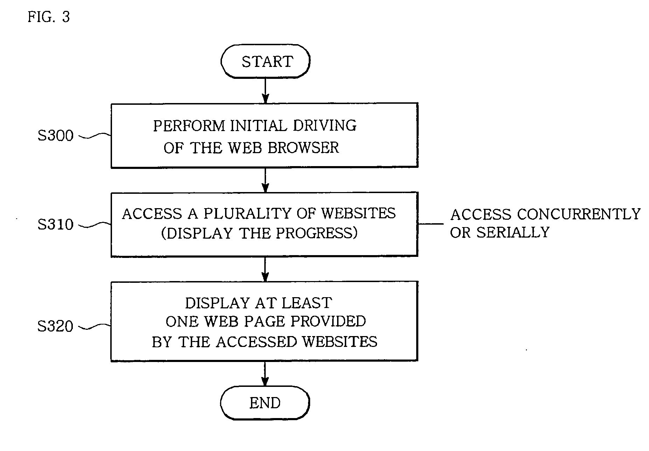

FIG. 3 is a flowchart illustrating a method for driving a web browser according to an embodiment of the present invention. The method for driving the web browser may be implemented in the communication device described with reference to FIGS. 1 and 2.

A method for driving the web browser will now be described with regard to the above described mobile terminal 10a.

The web browser is initially driven corresponding to a command input from a user (S300). For example, the user may search a menu tree, or menu structures, provided by the stored program of the mobile terminal 10a to drive the web browser.

The web browser accesses a plurality of websites designated by different Internet addresses respectively upon being driven (S310). For example, the controller 140 may access the plurality of content providing servers 40a, 40b, 40c, and 40d through the transceiver 100. The websites provided by the content providing servers 40a, 40b, 40c, and 40d will be hereinafter referred to as a first website 40a, a second website 40b, a third website 40c, and a fourth website 40d, respectively. Note that these terminologies are intended for use as label designations and not for ranking the websites.

The websites to be accessed upon initial driving of the web browser may be set or changed by the user. For example, the user may set each of the websites or a number of the websites. The user may set his or her frequently visited websites as the websites to be accessed upon initial driving of the web browser.

The controller 140 may display notification information for notifying the user of the progress of accessing the plurality of websites (S31 0). The notification information may be displayed through at least one form of graphic information or numeric information.

For example, the notification information may be displayed using the graphic information such as a bar shaped graphic figure in which the inside of the bar shaped graphic figure is gradually changed into a different color in proportion to the progress of accessing the plurality of websites (S310). For another example, the notification information may be displayed using numeric information such as the percentile number corresponding to the progress of accessing the plurality of websites (S310).

The controller 140 may start to access the plurality of websites simultaneously. For example, the controller 140 may control the web browser to concurrently attempt to access the plurality of the websites. However, the completion times of access of the plurality of the websites may vary as communication circumstances with the plurality of the websites may be different.

Alternatively, the controller 140 may access the plurality of the websites sequentially. For example, the controller 140 may attempt to access the first website 40a. The controller 140 may attempt to access the second website 40b after completion of the access to the first website 40a. The controller 140 may perform sequential accesses to the plurality of the websites according to a predetermined order in this manner.

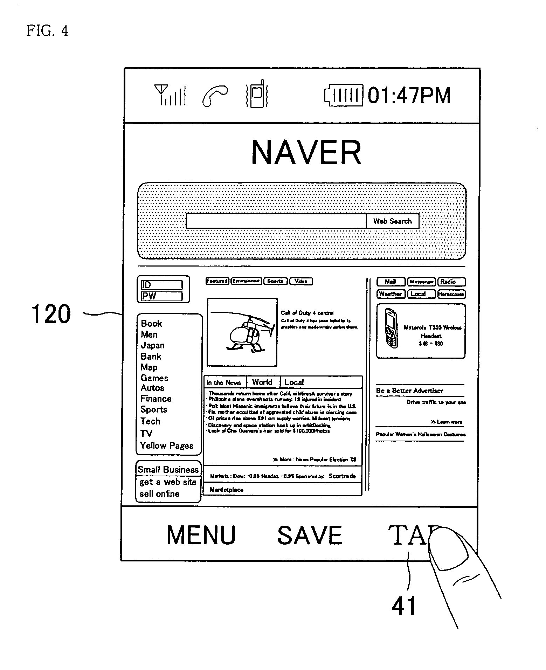

The controller 140 displays at least one web page provided by the accessed plurality of the websites on the display 120 (S320). FIG. 4 illustrates a screen displayed on the display 120, the screen displaying one web page of the first website 40a.

The controller may display on the display 120 a plurality of icons indicating the accessed plurality of the websites. For example, if the user selects a "TAB" button 41 provided on the screen, the plurality of the icons may be displayed on the screen of the display 120 as illustrated in FIG. 4.

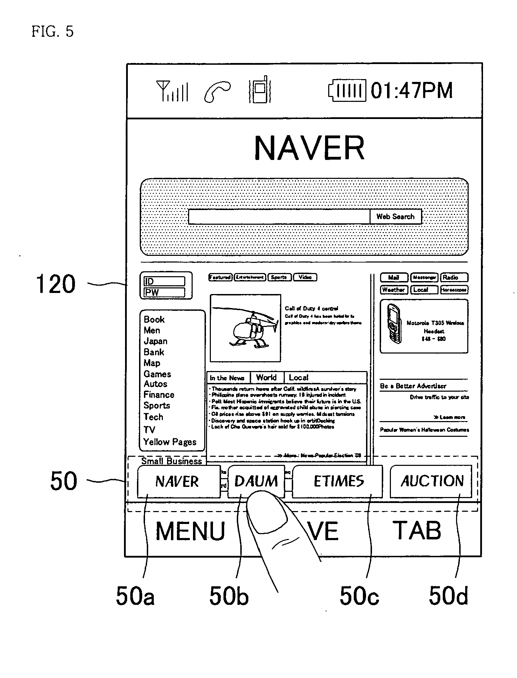

FIG. 5 illustrates a screen displaying a plurality of icons 50 indicating the first through fourth websites 40a-40d, respectively. If the user contacts the "TAB" button 41 provided by the display 120, implemented as a touch screen (FIG. 4), then the plurality of the icons 50 may appear on the screen displayed on the display 120, as illustrated in FIG. 5. The reference numerals 50a, 50b, 50c, and 50d represent the icons indicating the first website 40a, the second website 40b, the third website 40c, and the fourth website 40d, respectively.

The user may select any of the plurality of the icons 50a-50d for displaying the web page of the website indicated by the selected icon. Upon selection of a specific icon, the controller 140 may display the web page of the website indicated by the selected icon to occupy the whole screen displayed on the display 120.

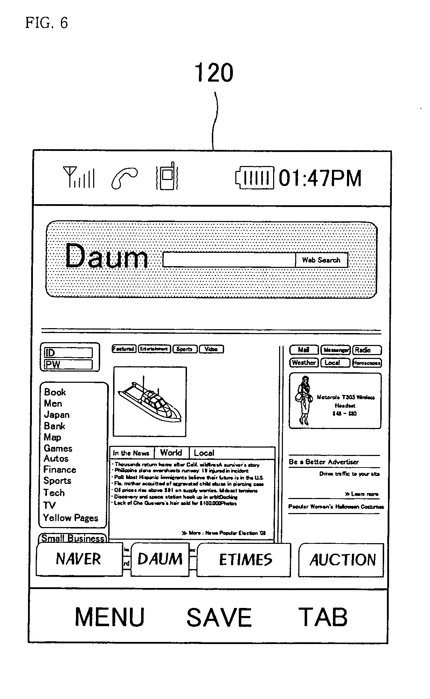

FIG. 6 illustrates a screen displaying a corresponding web page indicated by the selected icon. For example, if the user contacts the "DAUM" icon 50b as illustrated in FIG. 5, then the web page of the second website 50b may be displayed on the whole screen (FIG. 6).

Alternatively, the controller 140 may divide the whole screen into a plurality of sub-areas and display each of the web pages at each of the plurality of sub-areas.

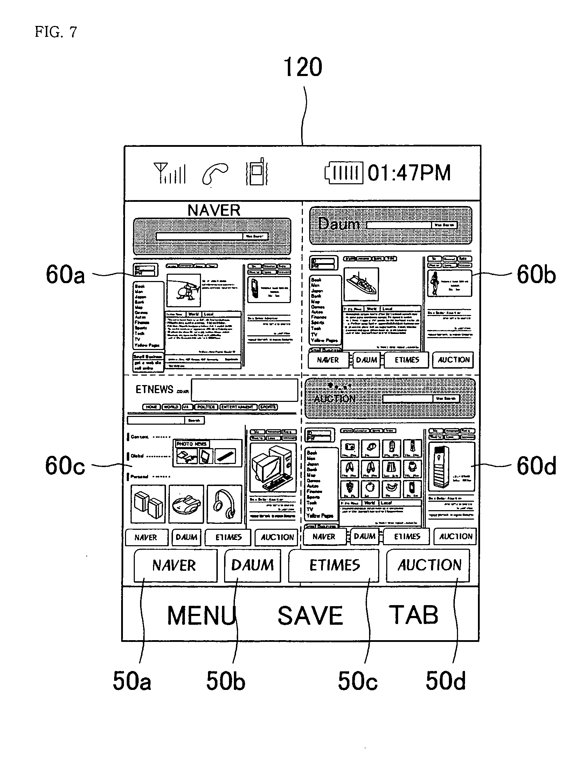

FIG. 7 illustrates a screen divided into 4 sub-areas to simultaneously display four web pages.

The controller 140 may display all of the web pages set by the user, as shown in FIG. 7, upon initial driving of the web browser. In FIG. 7, the plurality of the icons 50a, 50b, 50c, and 50d correspond to a plurality of web pages 60a, 60b, 60c, and 60d, respectively. If any of the plurality of icons is selected, then the corresponding web page may be activated.

The user may set or change the number of the web pages to be simultaneously displayed on the screen of the display 120 upon initial driving of the web browser. Further, the user may organize the layout of the screen displayed upon initial driving of the web browser in the desired form.

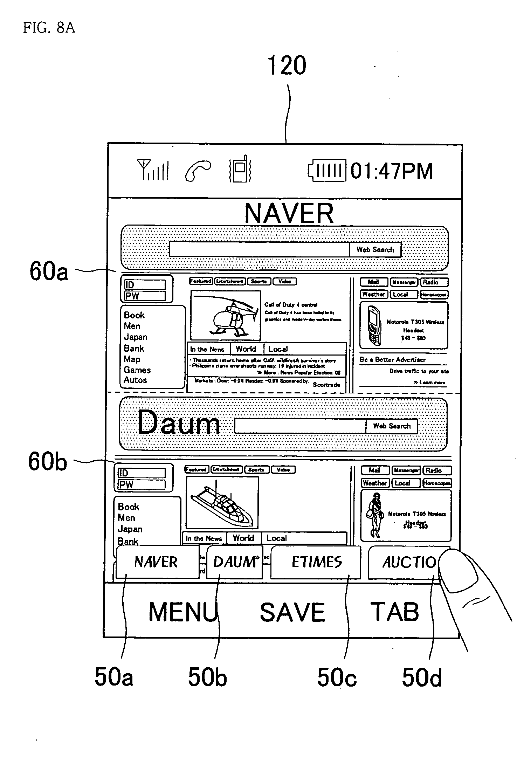

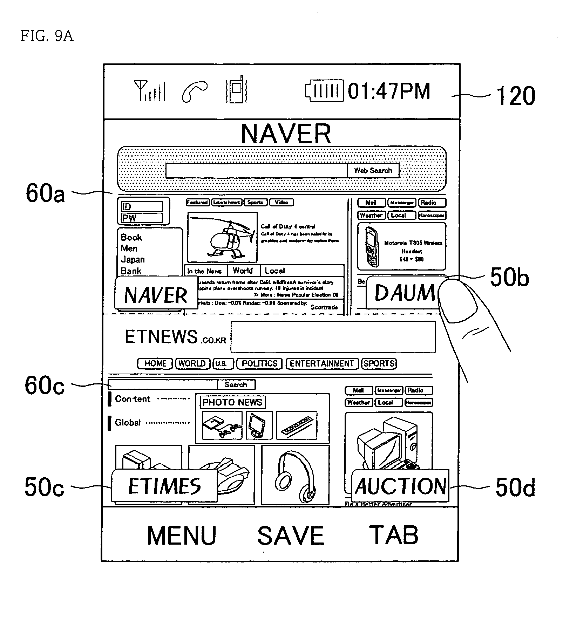

FIGS. 8A-8B and 9A-9B illustrate screens divided into two sub-areas including upper and lower portions to display two web pages upon initial driving of the web browser. The screens may be divided into left and right portions especially when the screen is displayed horizontally.

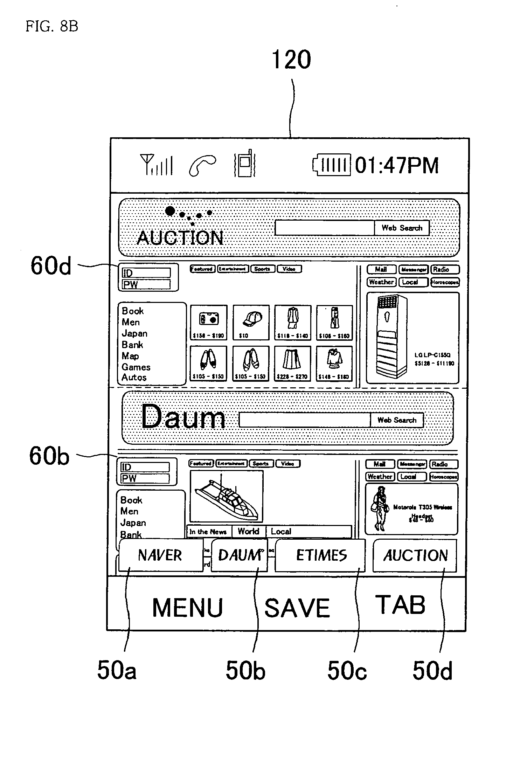

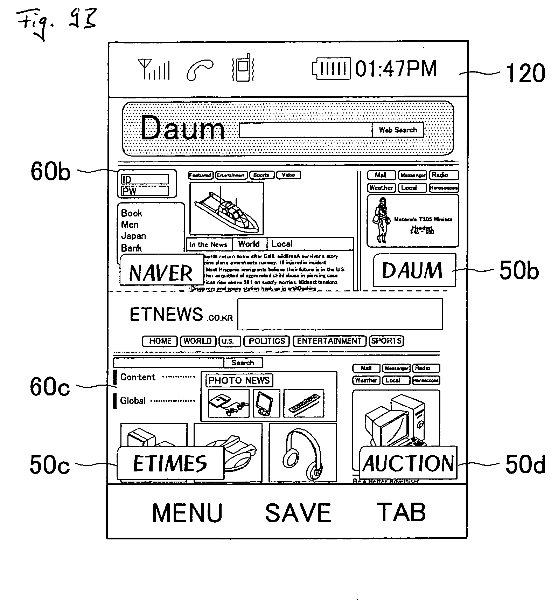

With reference to FIGS. 8A and 8B, the icons indicating the web pages are located at lower portions of the screen. Alternatively, with reference to FIGS. 9A and 9B, the icons are respectively located within the sub-areas displaying the corresponding web pages.

If the user contacts the "AUCTION" icon 50d when the first web page 60a is activated in FIG. 8A, the sub-area displaying the first web page 60a may be changed to display the fourth web page 60d corresponding to the "auction" icon 50d. In FIGS. 8A and 8B, each of the upper portions and the lower portions of the screens may display any of the web pages 60a, 60b, 60c, and 60d.

If the user contacts the "DAUM" icon 50b when the first web page 60a is activated in FIG. 9A, the sub-area displaying the first web page 60a may be changed to display the second web page 60b corresponding to the "DAUM" icon 50b. In FIGS. 9A and 9B, the upper portions of the screens may display either of the web pages 60a and 60b, while the lower portions of the screens may display either of the web pages 60c and 60d.

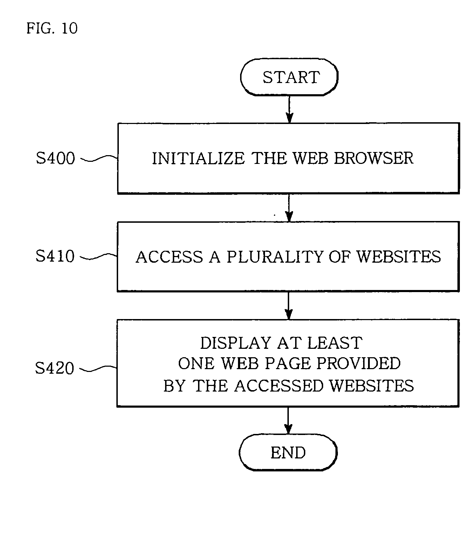

FIG. 10 is a flowchart illustrating a method for driving a web browser according to an alternative embodiment of the present invention. The method will be explained below with reference to the mobile terminal 10a, previously described.

The web browser is initialized (S400) corresponding to a command input from a user. For example, the user may search the menu tree, or menu structures, provided by the program of the mobile terminal 10a to initialize the web browser during navigating the Internet.

The initializing of the web browser may be performed during navigating the Internet. For example, the user may select a specific menu provided by the web browser for initializing the web browser when the user wants to go back to an initial state of the websites accessed upon initial driving of the web browser.

The web browser may access a plurality of websites accessed (S410) which may have been previously accessed upon initialization (S310 of FIG. 3), as described above. In this case, the previously accessed websites are designated by different Internet addresses.

As described above, the controller 140 may transmit and receive data with the plurality of the content providing servers 40a, 40b, 40c, and 40d to access the websites provided by the content providing servers 40a, 40b, 40c, and 40d. The controller 140 may access the plurality of the websites concurrently or sequentially, as described above.

The websites to be accessed upon initialization of the web browser may be set or changed by the user.

The controller 140 may further display notification information for notifying the user of the progress of accessing the plurality of websites (S410) in the form of graphic or numeric information.

The controller 140 may display at least one web page provided by the accessed websites on the display 120 (S420). The above description of the manner of display with reference to FIGS. 4 to 9B may also be applied to this embodiment.

For example, the display 120 may display one web page provided by the plurality of websites 40a to 40d on the whole screen, as illustrated in FIG. 4. The controller may further display on the screen of FIG. 4 a plurality of icons indicating the accessed websites, as illustrated in FIGS. 5 and 6, to display the web page of the corresponding website indicated by an icon selected from the displayed icons.

Alternatively, the screen of the display 120 may be divided into a plurality of sub-areas to display each of the web pages at each of the divided sub-areas, as illustrated in FIG. 7. The user may set or change the number of the web pages to be simultaneously displayed on the screen of the display 120, and may organize the layout of the screen displayed upon initial driving of the web browser in the desired form.

For example, the screen of the display may be divided into four sub-areas, as illustrated in FIG. 7 or into two sub-areas as shown in FIGS. 8A- 8B to 9A-9B.

The user may set or change the locations of the icons indicating the web pages in the screen. For example, the icons may be located at lower portions of each screen, as illustrated in FIGS. 8A and 8B. The icons may be respectively located at the sub-areas displaying the corresponding web pages as shown in FIGS. 9A and 9B.

The implementations of the method for driving the web browser described herein may be embodied in computer readable media recording programs to execute each method operation for driving the web browser.

## Claims

1. A method for operating a web browser of a communication device, the method comprising:
initializing the web browser;
accessing a plurality of websites designated by different addresses upon initial driving of the web browser; and
selectively displaying on a display of the communication device at least one web page associated with a corresponding at least one website of the plurality of websites.

2. The method of claim 1, further comprising:
displaying a plurality of icons individually associated with one of the plurality of websites, wherein if a specific icon is selected from the plurality of icons, a web page corresponding to the website associated with the selected icon is displayed on the display.

3. The method of claim 2, wherein the plurality of websites and the plurality of icons are displayed on a touch input device which permits input via user contact.

4. The method of any one preceding claim, further comprising:
displaying on the display a plurality of web pages individually corresponding to one of the plurality of websites, and displaying the plurality of web pages in individual sub-areas of the display.

5. The method of any one of claims 1 to 4, further comprising:
simultaneously accessing the plurality of websites.

6. The method of any one of claims 1 to 4, further comprising:
serially accessing the plurality of websites.

7. The method of any one preceding claim, wherein each of the plurality of websites and the number of the websites to be accessed are settable and changeable.

8. The method of any one preceding claim, further comprising displaying notification information indicating progress of the accessing of the plurality of websites, wherein the notification information preferably comprises at least one of graphic information and numeric information.

9. A mobile terminal, comprising:
a web browser;
a transceiver for transmitting and receiving data with a wired or wireless network;
a controller for accessing a plurality of websites designated by different addresses through the transceiver via the web browser upon initial driving of the web browser; and
a display for displaying at least one web page associated with a corresponding at least one website of the plurality of websites.

10. The mobile terminal of claim 9, wherein the display displays a plurality of icons individually associated with one of the plurality of websites, wherein if a specific icon is selected from the plurality of icons, a web page corresponding to the website associated with the selected icon is displayed on the display.

11. The mobile terminal of claim 10, further comprising:
a touch input device configured to display a plurality of icons and which permits input via user contact.

12. The mobile terminal of any one of claims 9 to 11, wherein the controller displays a plurality of web pages in individual sub-areas of the display, the plurality of web pages individually corresponding to one of the plurality of websites.

13. The mobile terminal of any one of claims 9 to 12, wherein the controller simultaneously accesses each of the plurality of websites.

14. The mobile terminal of any one of claims 9 to 12, wherein the controller serially accesses each of the plurality of websites.

15. The mobile terminal of any one of claims 9 to 14, wherein each of the websites and the number of the websites to be accessed is settable and changeable.

16. The mobile terminal of any one of claims 9 to 15, wherein the controller displays notification information indicating progress of the accessing of the plurality of websites, wherein the notification information preferably comprises at least one of graphic information and numeric information.
